Europäisches Patentamt

European Patent Office

Office européen des brevets

(19)

(11) Veröffentlichungsnummer: **0 041 269**
**B1**

(12) **EUROPÄISCHE PATENTSCHRIFT**

(45) Veröffentlichungstag der Patentschrift:
28.03.84

(51) Int. Cl.³: **C 04 B 7/24**

(21) Anmeldenummer: **81104218.3**

(22) Anmeldetag: **02.06.81**

(54) Verfahren zur Herstellung von calciumsilikat- und/oder calciumaluminathaltigen, gegebenenfalls pulverförmigen, Klinkermaterialien.

(30) Priorität: **02.06.80 DE 3020896**

(43) Veröffentlichungstag der Anmeldung:
**09.12.81 Patentblatt 81/49**

(45) Bekanntmachung des Hinweises auf die Patenterteilung:
**28.03.84 Patentblatt 84/13**

(84) Benannte Vertragsstaaten:
**AT BE CH FR GB IT LI NL SE**

(56) Entgegenhaltungen:
**DD - A - 138 060
DE - A - 2 649 362
FR - A - 2 376 086
GB - A - 1 556 788
US - A - 4 113 833
US - A - 4 174 974**

(73) Patentinhaber: **LICENCIA TALALMANYOKAT
ERTEKESITÖ VALLALAT, Bajcsy-Zsilinszky Ut, 16,
H-1368 Budapest (HU)**

(72) Erfinder: **Puskás, Ferenc, Dipl.-Ing., Monostori u. 23,
H-1031 Budapest III (HU)**
Erfinder: **Lázár, Ferenc, Dipl.-Ing., Tusnádi köz 3,
H-1125 Budapest XII (HU)**

(74) Vertreter: **Beszédes, Stephan G. Dr., Münchener
Strasse 80a Postfach 1168, D-8060 Dachau (DE)**

Verfahren zur Herstellung von calciumsilikat- und/oder calciumaluminathaltigen, gegebenenfalls pulverförmigen Klinkermaterialien

Die Erfindung betrifft ein Verfahren zur Herstellung von calciumsilikat- und/oder calciumaluminathaltigen, gegebenenfalls pulverförmigen Klinkermaterialien mit einem Gehalt an mindestens 40 Gew.-% Dicalciumsilikat (2 CaO·SiO$_2$) [C$_2$S] und/oder Tricalciumsilikat (3 CaO·SiO$_2$) [C$_3$S] und/oder Calciumaluminat (3 CaO·Al$_2$O$_3$) [C$_3$A] bzw. (12 CaO·7 Al$_2$O$_3$) [C$_{12}$A$_7$] und/ oder Calciumferrialuminat (4 CaO·Al$_2$O$_3$·Fe$_2$O$_3$) [C$_4$AF], wie Zementklinker oder von selbst zu Staub zerfallendem Dicalciumsilikatklinker, aus einem oder mehreren festen Brenngrundmaterialien einschliesslich Kohlenarten bzw. industrieller Abfallstoffe über deren Verbrennen bei Temperaturen unter 1700°C und einem oder mehreren calciumhaltigen Zusatzstoffen.

In der letzten Zeit ist der Zementbedarf der Menschheit in grösserem Masse gestiegen als die Zementerzeugung. Dieser Umstand verursacht einerseits Spannungen im Verhältnis zwischen Angebot und Nachfrage und regt andererseits zur Entwicklung von Zementersatzmaterialien und neuen wirksamen Verfahren an. Auch die Tatsache, dass in der Umgebung von Wärme- und Heizkraftwerken die Menge der auf Halden angehäuften Schlacke und Flugasche unaufhaltsam zunimmt, ist allgemein bekannt.

Es besteht daher das Bestreben, es zu versuchen, die Industrieflugaschen und -schlacken in der Bauindustrie zu verwerten. Als dessen Ergebnis werden Flugaschen von bestimmtem Typ, beispielsweise puzzolanartige Flugaschen und einzelne Flugaschen von basischem Charakter, mit Erfolg als Zementersatzmaterialien bei zahlreichen weniger anspruchsvollen Baugrundmaterialien, beispielsweise zur Bodenverfestigung, zur Errichtung von zeitweiligen Strassen oder solchen für geringen Verkehr und als Zementzusatzstoffe, verwendet.

Diese Verwertung ist aber nicht ausreichend, da sie nur in individuellen Fällen zur Anwendung zum gegebenen Zweck, je nachdem, von welchem Typ das den Aschengehalt der Kohle bildende Gestein ist, geeignet ist. Wegen dieser Schwierigkeit ist die allgemeine Verwertung der Kohlenschlacke bzw. der Flugasche bisher nicht gelöst.

Es sind zahlreiche Verfahren, bei welchen durch Umwandlung von Flugaschen mit höherem Al$_2$O$_3$-Gehalt zu Dicalciumsilikat und dessen auf seiner Polymorphie beruhendes, von selbst erfolgendes Zerfallen zu Staub, Auslaugen des letzteren mit verdünnter Sodalösung, Decarbonisieren der Lösung sowie Calcinieren des Tonerdehydrates, Tonerde und durch erneutes Glühen des verbliebenen Schlammes Zement erhalten wird, bekannt.

Solche Verfahren sind in den polnischen Patentschriften Nrn. 41979, 43443 und 43444, in den ungarischen Patentschriften Nrn. 122738, 140323 148401, 162162 und 162682 sowie in der deutschen Patentschrift Nr. 1020612 beschrieben.

Grosse Schwierigkeit bereitet jedoch bei diesen Verfahren, dass einerseits das intensive Homogenisieren der Ausgangsmaterialien (Ton, Flugasche, Bauxit, Brandschiefer und Kalksteinpulver) ein ernstes Problem ist und dass bei der weitaus überwiegenden Mehrzahl derselben ein gerichtetes Kühlen angewandt werden muss und zur Förderung des Zerfallens zu Staub von selbst sogar reduzierende Hilfsstoffe der Mischung zugesetzt werden müssen.

Ferner sind aus der deutschen Offenlegungsschrift Nr. 2615590 und der bekanntgemachten ungarischen Patentanmeldung Nr. T/17720 („Szabadalmi Közlöny", 1980, Februarheft 1980) diesbezügliche Verfahren bekannt.

Beim Verfahren der deutschen Offenlegungsschrift Nr. 2615590 (im folgenden erstgenanntes Verfahren genannt) werden von selbst zu Staub zerfallendes Dicalciumsilikat enthaltende Materialien in der Weise hergestellt, dass die Rohmaterialien (Flugasche, Bauxit, Kohlenschlacke, Ton bzw. Kalksteinpulver), zweckmässig nach ihrem gemeinsamen Vermahlen und dem Einstellen des Gemisches, in einen trockenen Wärmeaustauscher geleitet, in welchem sie mit im Gegenstrom geführten Rauchgasen des Drehrohrofens vorgewärmt werden, und im Drehrohrofen gebrannt und zu von selbst zu Staub zerfallendem Dicalciumsilikat umgewandelt, worauf aus diesem nach der bekannten Verfahrenstechnik Tonerde und durch ein erneutes Brennen Zement erzeugt wird.

Beim Verfahren der bekanntgemachten ungarischen Patentanmeldung Nr. T/17720 (im folgenden zweitgenanntes Verfahren genannt) wird ähnlich vorgegangen, in diesem Falle sind aber die Ausgangsgrundmaterialien wie folgt: Ölschiefer, Abraum nach dem Schwelen, Abraum von erschöpften Ölbrunnen, minderwertiges organisches Material enthaltende Gesteine bzw. deren Asche und Kalksteinpulver. Auch bei diesem Verfahren wird, zweckmässig nach gemeinsamen Mahlen und einer Rohmehlbildung (wobei auch der Kalksteinanteil der Rohmehlbildung vorgeschrieben ist), das Rohmehl in eine Wirbelschichtreaktionsvorrichtung oder einen Drehrohrofen eingebracht und bei 1420 bis 1480°C zu Zementklinker gebrannt und daraufhin in bekannter Weise zu Zement aufgearbeitet.

Bei diesen Verfahren ist es vorteilhaft, dass durch sie eine bessere Wärmewirtschaft sichergestellt wird. Beim erstgenannten Verfahren sind zum von selbst erfolgenden Zerfallen zu Staub reduzierende Zusätze nicht erforderlich, während beim zweitgenannten Verfahren die Wärmewirtschaft auch dadurch verbessert wird, dass auch der Restschwelölgehalt der Grundmaterialien beim Klinkerbrennen verwertet wird.

Auch bei diesen Verfahren bereitet aber das gemeinsame Mahlen des auf der Umgebungstemperatur befindlichen Grundmateriales, insbesondere des ölhaltigen Materiales beim zweitgenannten Verfahren, aber auch der Haftfeuchtigkeit enthaltenden Flugasche, mit dem Kalkstein und das Homogenisieren derselben wegen ihres Festbackens Schwierigkeiten. Ein weiteres Problem bedeutet es, dass die die Grundlage des zweitgenannten Verfahrens bildenden Grundmaterialien (ölige Abraummaterialien) nicht allgemein vorkommen (beispielsweise könnte in Ungarn der aus Ölschiefer oder aus Schwelölabraum herstellbare Zement kaum das Aufarbeiten der industriellen Abfallstoffe lösen und würde den Zementbedarf nicht wesentlich vermindern).

Bei diesen Verfahren besteht auch der Nachteil, dass die Abfallstoffe (beispielsweise die Flugasche von der Halde) an den Ort der Aufarbeitung gefördert und von der Temperatur der Umgebung erneut erwärmt werden müssen, wobei bei den auch Haftfeuchtigkeit enthaltenden Grundmaterialien auch diese mit zusätzlicher Wärmemenge entfernt werden muss.

Ferner ist aus der britischen Patentschrift Nr. 1556788 ein Verfahren zur Herstellung von hydraulischem Zementmaterial, bei welchem Kalkstein oder gebrannter Kalk zu Kohle in solcher Menge zugegeben wird, dass das Gewichtsverhältnis des Kalkbestandteiles zur Kohlenasche 2:2 bis 4:2 bei Verwendung von Kalkstein und 1,3:2 bis 2,3:2 bei Verwendung von gebranntem Kalk ist, die Kohle und der Kalkstein bzw. der gebrannte Kalk in einem Kohlemahlwerk miteinander vermahlen werden, das gemahlene Produkt als Brennstoff einem Zyklonbrenner zum Brennen zugeführt wird und die geschmolzenen Aschetröpfchen vom Brennvorgang zur Bildung eines glasigen Produktes abgeschreckt und dann vermahlen werden, bekannt. Dieses Verfahren umfasst auch das Rückführen von Asche vom Kesselbetrieb und/oder von niedergeschlagenem Staub von einem Entstaubungsfilter der Anlage entweder über das Kohlemahlwerk zurück zum Zyklonbrenner oder unmittelbar zurück zum letzteren. Von einer Verwertung der austretenden Rauchgase im Verfahren ist keine Rede, da diese auf dem Entstaubungsfilter vom Staub getrennt und in die Umgebung nutzlos abgeleitet werden. Auch ist von einer Tonerdeherstellung keine Rede, da diese wegen des plötzlichen Abkühlens nicht entstehen kann, wobei durch das schnelle Abkühlen die Produkteigenschaften in ungünstigem bzw. unerwünschtem Sinne beeinflusst werden. Ferner ist in der genannten Druckschrift als einziges Brenngrundmaterial Kohle vorgesehen. Auch finden sich bezüglich der angewandten Temperaturen keine Angaben in der genannten Druckschrift.

Weiterhin ist in der US-Patentschrift Nr. 4113833 ein Verfahren zur Herstellung von Aluminiumoxyd unmittelbar aus festen Brennstoffen mit einem Gehalt an Aluminium-, Silicium- und Eisenoxyden während des Verbrennens der Brennstoffe, bei welchem der feste Brennstoff mit Kalkstein bei Molverhältnissen von $CaO:SiO_2$ von 2,0, von $CaO:Al_2O_3$ von 1,3 bis 1,8 und von $CaO:Fe_2O_3$ von 1,0 vermischt wird, die erhaltene Mischung bei etwa 1700 bis 1900°C gebrannt wird, um ein Produkt mit einem Gehalt an den Calciumverbindungen $2\,CaO \cdot SiO_2$, $12\,CaO \cdot 7\,Al_2O_3$, $CaO \cdot Al_2O_3$ und $CaO \cdot Fe_2O_3$ in Form einer Schmelze zu erhalten, die erhaltene Schmelze mit einer Geschwindigkeit von etwa 6°C/min auf 1300°C und von 1300°C auf Raumtemperatur abgekühlt wird, um das im Produkt enthaltene Dicalciumsilikat von der β-Modifikation in die γ-Modifikation zu überführen, und das gekühlte Produkt mit einer Sodalösung zum Extrahieren des Aluminiumoxydes ausgelaugt wird, wobei ein im wesentlichen aus Dicalciumsilikaten bestehender Schlamm zurückgelassen wird, beschrieben. Es ist weder von einer Verwertung der Flugasche noch von einer Verwertung der Rauchgase im Verfahren die Rede. Auch ist es beim genannten bekannten Verfahren nachteilig, dass eine Brenntemperatur von mindestens 1700°C angewandt werden muss, da sich dies auf die Lebensdauer der Vorrichtung nachteilig auswirkt, weswegen die praktische Durchführung dieses Verfahrens problematisch ist. Hinzu kommt noch, dass beim Verfahren der genannten Entgegenhaltung ein langsames 2stufiges Kühlen, bei welchem es sich um das weiter oben genannte gerichtete Kühlen handelt, erforderlich ist, da wie bereits erwähnt hohe Temperaturen anzuwenden sind. Durch dieses Kühlen ist das Verfahren der genannten Druckschrift kompliziert und langsam, was ebenfalls einen Nachteil darstellt. Als Brenngrundmaterialien sind in der US-Patentschrift Nr. 4113833 auch nur Kohle und ähnliches, wie Torf und Schieferton, erwähnt.

Die DDR-Patentschrift Nr. 138060 betrifft ein Verfahren zur abproduktfreien Kopplung der Rauchgasentschwefelung und Zementherstellung, bei welchem ein Stoffkreislauf mit mehrfacher Nutzung der Kalkkomponente sowohl zur Rauchgasentschwefelung als auch zur Zementherstellung und zusätzlicher Verwertung der Verbrennungsrückstände geschaffen wird, indem in den Brennraum von stationären Verbrennungsanlagen Kalksteinmehl oder kalkhaltiges Material aufgegeben wird und aus dem dabei entstehenden Abprodukt mit Zementrohstoffen und/oder weiteren Industrieanfallstoffen eine für die normgerechte Zementherstellung konditionierte Rohmischung für eine separat betriebene Brennanlage hergestellt wird. Auch bei diesem Verfahren ist keine Rede von einer Verwertung der Rauchgase und der Flugasche oder gar der beiden in Mischung miteinander zur Zement- bzw. Tonerdeherstellung. Vielmehr werden die Rauchgase vom Kalksteinmehl oder kalkhaltigen Material im Verbrennungsraum entschwefelt und nicht in die getrennt betriebene Zementbrennanlage geleitet. Dazu muss in der Verbrennungsanlage das Kalksteinmehl bzw. kalkhaltige Material in grossem Überschuss vorliegen (vgl. auch S. 5, Zeile 14 von unten bis 12 von unten der DDR-Patentschrift Nr. 138060), so dass die Materialzusammensetzung in der Verbrennungsanlage weit von der für die Zementherstellung erforderlichen Zusammensetzung ist, weswegen dem Verbrennungsrückstand der Verbrennungsanlage Zementrohstoffe oder dergleichen zugesetzt werden müssen (vgl. S. 10, Zeilen 9 bis 13 [vom Patentanspruch 1] und S. 8 unten [vom Beispiel] der genannten Druckschrift). Auch finden sich in der genannten Druckschrift keine Temperaturangaben. Auch in dieser Druckschrift ist nur Kohle als Brenngrundmaterial erwähnt.

Ausserdem ist aus der deutschen Offenlegungsschrift Nr. 2649362 ein Verfahren zur Herstellung hydraulischer Bindemittel durch Vereinigung der Rohstoffe auf schmelzflüssigem Wege, bei welchem fester Brennstoff, vorzugsweise mit hohem Aschegehalt, die zur Herstellung der Bindemittel erforderlichen kalkigen, tonigen und silikatischen Zuschläge und Verbrennungsluft in einem für die Herstellung des Bindemittels erforderlichen stöchiometrischen Verhältnis gleichzeitig oder davon getrennt über den Brenner einer Zyklonschmelzfeuerung aufgegeben werden, die Schlacke in flüssiger Form abgezogen und durch rasche Kühlung granuliert wird und die Abhitze in bekannter Weise zur Erzeugung von Dampf verwendet wird. Das für die britische Patentschrift Nr. 1556788 Gesagte gilt auch für diese Druckschrift mit der Abweichung, dass beim Verfahren der deutschen Offenlegungsschrift Nr. 2649362 nicht nur von der Verwertung der Rauchgase für die Zementbzw. Tonerdeherstellung keine Rede ist, sondern nicht einmal von der einer auf dem Filter abgetrennten Flugasche. Das rasche Kühlen der Schlacke bringt wiederum ungünstige Produkteigenschaften mit sich. In dieser Druckschrift finden sich auch keine Temperaturangaben. Auch ist Koks als einziges Brenngrundmaterial genannt.

Ferner ist aus der US-Patentschrift Nr. 4174974 ein Verfahren zum Umwandeln von Kohlenascheschlacke von einem Verschlackungskohlevergaser zu einem marktfähigen Zementprodukt mit den Eigenschaften von Portlandzement, bei welchem geschmolzene bituminöse, halbbituminöse oder nicht verkokende lignitische Kohlenschlacke mit Temperaturen von etwa 1535 bis 1980°C von einem Verschlackungskohlevergaser in eine Schmelzkammer überführt wird, ein vorerhitztes Kalk enthaltendes Mineral mit dieser Schlacke in einem Verhältnis von 1 Teil der letzteren zu 1,2 bis 4 Teilen des ersteren unter Bildung eines homogenen Zementproduktes mit Temperaturen von etwa 1205 bis 1535°C umgesetzt wird, dieses Zementprodukt in eine Abschreckkammer, in welcher es sich abkühlt und in Form von Klinkern fest wird, überführt wird und diese Klinker gepulvert werden, bekannt. Bei diesem Verfahren erfolgt keine Zugabe von calciumhaltigen Zusatzstoffen vor und/oder während des Vergasens, sondern erst zur fertigen Schlacke nach deren Abziehen vom Vergasungsraum.

Die französische Offenlegungsschrift Nr. 2376086 betrifft ein Verfahren zur Herstellung von Zementklinkern, bei welchem die Verbrennung der Brenngrundmaterialien ohne Zugabe von calciumhaltigen Zusatzstoffen vor und/oder während des Verbrennens durchgeführt wird, vielmehr die Zugabe dieser Zusatzstoffe erst zu den Aschen erfolgt. Dabei kann die Flugasche von der Verbrennungsanlage (Kraftwerk) auf Filtern gesammelt, mit calciumhaltigen Zusatzstoffen vermischt und zur Zementbrennanlage geleitet werden. Bezüglich des letztgenannten Merkmales gelten die in bezug auf die britische Patentschrift Nr. 1556788 gemachten Ausführungen entsprechend.

Der Erfindung liegt die Aufgabe zugrunde, unter Behebung der Nachteile der bekannten Verfahren ein solches Verfahren zur Herstellung von calciumsilikat- und/oder calciumaluminathaltigen, gegebenenfalls pulverförmigen, Klinkermaterialien mit einem Gehalt an mindestens 40 Gew.-% Dicalciumsilikat (2 CaO·SiO$_2$) und/oder Tricalciumsilikat (3 CaO·SiO$_2$) und/oder Calciumaluminat (3 CaO·Al$_2$O$_3$ bzw. 12 CaO·7 Al$_2$O$_3$) und/oder Calciumferrialuminat (4 CaO·Al$_2$O$_3$·Fe$_2$O$_3$) aus einem oder mehreren festen Brenngrundmaterialien einschliesslich Kohlenarten bzw. industrieller Abfallstoffe über deren Verbrennen bei Temperaturen unter 1700°C und einem oder mehreren calciumhaltigen Zusatzstoffen, welches sowohl hinsichtlich des Energieaufwandes bei besserer Ausnutzung der latenten Energie der Ausgangsstoffe und der Energie von deren Reaktionen sowie von deren Verbrennungsprodukten als auch hinsichtlich des Investitionsaufwandes vorteilhafter bzw. wirtschaftlicher ist und mit einer geringeren Umweltverschmutzung verbunden ist, zu schaffen.

Das Obige wurde überraschenderweise durch die Erfindung erreicht.

Gegenstand der Erfindung ist ein Verfahren zur Herstellung von calciumsilikat- und/oder calciumaluminathaltigen, gegebenenfalls pulverförmigen Klinkermaterialien für die Herstellung von Zement bzw. Zement und Tonerde, mit einem Gehalt an mindestens 40 Gew.-% Dicalciumsilikat (2 CaO·SiO$_2$) und/oder Tricalciumsilikat (3 CaO·SiO$_2$) und/oder Calciumaluminat (3 CaO·Al$_2$O$_3$ bzw. 12 CaO·7 Al$_2$O$_3$) und/oder Calciumferrialuminat (4 CaO·Al$_2$O$_3$·Fe$_2$O$_3$), aus einem oder mehreren festen Brenngrundmaterialien, einschliesslich Kohlenarten und Abfallstoffen mit Heizwerten von mindestens 4185 kJ/kg über deren Verbrennen bei Temperaturen unter 1700°C, und einem oder mehreren calciumhaltigen Zusatzstoffen insgesamt in Mengen entsprechend CaO-Äquivalenten von 0,2 bis 3,5 mol je Mol der SiO$_2$-, Al$_2$O$_3$- und Fe$_2$O$_3$-Hauptbestandteile der unbrennbaren Ascherückstände der Brenngrundmaterialien, wobei man einen Teil der Zusatzmenge der calciumhaltigen Zusatzstoffe zu den Brenngrundmaterialien vor und/oder nach deren Mahlen bzw. vor und/oder während ihres Verbrennens zugibt, dieses Material im Dampfkessel mit Kohlenstaubfeuerung eines Kraftwerkes verbrennt und den unbrennbaren Rückstand nach Zugabe der restlichen Menge der calciumhaltigen Zusatzstoffe erneut brennt, welches dadurch gekennzeichnet ist, dass vom Feuerraum des Dampfkessels die Flugasche und die Rauchgase der, gegebenenfalls mit calciumhaltigen Zusatzstoffen versehenen, Brenngrundmaterialien bei Temperaturen von 150 bis 750°C, ohne dass der Staub in einem Elektrofilter abgeschieden und durch Leiten in die Umgebung abgekühlt wird, unmittelbar in einen an den Kessel angeschlossenen, aus mehreren Gliedern bestehenden Zyklonvorwärmer geleitet werden, gegebenenfalls in den Zyklonvorwärmer feingemahlenes Kalksteinpulver in zur gewünschten Gemischeinstellung notwendiger Menge eingeführt wird und das Gemisch danach bei 1100 bis 1700°C fertiggebrannt wird.

Vorzugsweise werden als Dampfkessel zum Verbrennen solche mit normaler Kohlenstaubfeuerung von Wärmekraftwerken, Schlackenschmelzöfen mit Zyklonfeuerung oder Pyrofusionsabfallverbrennungskesseln, vorteilhaft bei gleichzeitiger Kesseldampferzeugung, verwendet.

Im Zyklonvorwärmer werden auch die Flugasche und Rauchgase des Dampfkessels als Wärmequelle und als Wirbelmedium zur Klinkermaterialherstellung verwendet.

So können mittels des erfindungsgemässen Verfahrens bzw. autoklavenbehandelte vorgefertigte Bauelemente, Gasbeton und Mörtel erzeugt werden.

Im erfindungsgemässen Verfahren können als Abfallstoffe gemeindliche und/oder industrielle Abfallstoffe eingesetzt werden.

Vorteilhaft kann bzw. können als Kohlenarten Anthrazit, Steinkohle, Braunkohle, Lignit und/oder Brandschiefer verwendet werden.

Vorteilhaft kann bzw. können als calciumhaltige Zusatzstoffe Kalkstein, Gips, Kalkhydrat, Wollastonit, gebrannter Kalk und/oder Abfälle mit hohem Calciumgehalt verwendet werden.

Das Verbrennen der Brenngrundmaterialien kann in der Weise erfolgen, dass zur Aufrechterhaltung der gewünschten Temperatur entweder nur die Verbrennungswärme des Brennmateriales oder auch eine sonstige Wärmequelle verwendet wird.

So beginnt im wesentlichen schon während der Feuerung infolge des Inreaktiontretens des vorliegenden Zusatzstoffes und der glühenden Flugasche bzw. Schlacke die Bildung der klinkerbildenden nützlichen Verbindungen, welche in der folgenden Klinkerbrennverfahrensstufe die Verweilzeit und die zum Klinkerbrennen erforderliche Temperatur verkürzt.

Das in den Dampfkessel eingeführte und gegebenenfalls zum Teil in den Zyklonvorwärmer geführte Kalksteinpulver wird zweckmässig mit Hilfe eines auf der Mengenmessung des in den Kessel geleiteten Brennmateriales beruhenden Anteilreglers dosiert.

Um eine hohe Genauigkeit des Homogenisierens der Mischung zu erreichen, wird innerhalb des Zyklonvorwärmsystemes vorzugsweise eine Materialrückführung durchgeführt, deren Mass zweckmässig einen zurückgeführten Materialanteil von 50 Gew.-% nicht übersteigt. Gleichzeitig stellt dies die gewünschte Verweilzeit des Materiales im Bereich der höheren Temperatur sowie den guten Wärmeausgleich sicher. Die Zyklonvorwärmer sind zweckmässig in mehreren Stufen in Reihe und parallel geschaltet; es ist auch zweckmässig, dass die einzelnen Stufen übereinander angeordnet sind und an die einzelnen Zyklonglieder unter ihnen Behälter zum Aufwirbeln und Staubhomogenisieren, in welchen die Rauchgase im Gegenstrom zum Material strömen, angeschlossen sind.

Das vorgewärmte, auf einer Temperatur von etwa 800 bis 950°C befindliche Material wird zweckmässig in einem Reaktionsrohr oder einem Drehrohrofen zu Klinkermaterial gebrannt, wobei auch die heissen Rauchgase des Ofens in den Zyklonvorwärmer geleitet werden, was das Vorwärmen des Materiales und zum Teil sein aufwirbelndes Mischen sicherstellt.

Im Falle der Verwendung von gemeindlichen Abfallstoffen und/oder industriellen Abfallstoffen als festen Brenngrundmaterialien wird bzw. werden vorteilhafterweise der bzw. die calciumhaltige(n) Zusatzstoff(e) in Mengen entsprechend CaO-Äquivalenten von 1 bis 3,5 mol je Mol der $SiO_2$-, $Al_2O_3$- und $Fe_2C_3$-Hauptbestandteile der unbrennbaren Ascherückstände der ersteren verwendet.

Es wurde festgestellt, dass das aus dem erfindungsgemäss vorbereiteten, mit Zusatzstoffen korrigierten und bei einer Temperatur von 1100 bis 1300°C in Kesseln mit normaler Staubkohlenfeuerung verbrannten Brennmaterial unmittelbar hergestellte Pulver von Zementfeinheit im Vergleich zu den aus in herkömmlicher Weise verbrannten Brennmaterialien entstandenen Filterflugaschen eine günstigere hydraulische Bindefähigkeit aufweist und auch in solchen Fällen ähnlich günstige Eigenschaften hat, in welchen von solchem Kohlenstaub ausgegangen wird, welcher beim Verbrennen ohne Zusatzstoff eine Flugasche, die überhaupt keine hydraulische Bindefähigkeit zeigt, ergibt.

Bei Verwendung von aschebildendem Kohlenstaub mit hohem $Al_2O_3$-Gehalt (etwa 28 bis 34 Gew.-%) seiner Asche wurde festgestellt, dass beim Vorgehen nach dem erfindungsgemässen Verfahren und Einstellen der aschenbildenden Hauptbestandteile auf die Zusammensetzung Dicalciumsilikat ($2 CaO \cdot SiO_2$), Calciumaluminat [$C_{12}A_7$] und [$C_3F$] der Asche bei einer Temperatur von 1200 bis 1250°C nach 3 bis 4 min langer Wärmebehandlung, also bei günstigerer Einstellung als herkömmlich, vom auf etwa 150°C abgekühlten Pulver von Puderfeinheit bei seinem Einbringen in eine 5- bis 6%ige Natriumcarbonatlösung 87 Gew.-% in 1 min in Lösung gehen.

Durch das erfindungsgemässe Verfahren wurden auch die bisher mit vielen Unannehmlichkeiten verbundenen Probleme der Unterbringung der bei der Feuerung von Kraftwerksdampfkesseln mit festen Brennmaterialien entstehenden Flugasche sowie der damit verbundenen Umweltverschmutzung beseitigt, indem die Flugasche der bei den Dampfkesseln verwendeten festen Brennmaterialien unmittelbar in energiesparender Weise zu calciumsilikat- und/oder calciumaluminathaltigen Baumaterialien umgewandelt werden. Durch das erfindungsgemässe Verfahren wird gleichzeitig das Problem des ständig steigenden Bedarfes an hydraulischen Baugrundmaterialien, beispielsweise der Zementbedarf, dauernd befriedigt.

Die Erfindung wird an Hand der folgenden Beispiele näher erläutert.

*Beispiel 1:*

Als Grundmaterial wurden 7,7 t Kohle (Aschengehalt: 13 Gew.-%; Schlackenzusammensetzung: 43,1 Gew.-% $SiO_2$, 28,1 Gew.-% $Al_2O_3$, 11,0 Gew.-% $Fe_2O_3$, 10,2 Gew.-% CaO, 3,2 Gew.-% MgO, 1,3 Gew.-% $SO_3$ und 3,1 Gew.-% Sonstiges) mit 0,7 t feingemahlenen Kalksteinpulver (Zusammensetzung: 53,5 Gew.-% CaO, 43,5 Gew.-% Glühverlust und 3 Gew.-% Sonstiges) als Zusatzstoff nach dem Mahlen unter eine Korngrösse von 1 mm in einem Dampfkessel bei einer Temperatur von etwa 1200 bis 1500°C verbrannt. Der etwa 1,4 t betragende unbrennbare Rückstand mit einer Temperatur von 150 bis 300°C, das heisst die heisse Flugasche und die Rauchgase, wurden in ein mehrstufiges Zyklonvorwärmsystem eingeführt und dann wurden mit den heissen Rauchgasen (zum Teil mit den Rauchgasen des Klinkerbrennofens) bei Wirbelschichthomogenisieren mit Hilfe eines Anteilreglers noch 19 t Kalksteinpulver zum Material zugegeben. Vom wärmsten Glied des Zyklonvorwärmsystemes wurden 40 bis 45 Gew.-% des eine Temperatur von etwa 850°C aufweisenden Materiales kontinuierlich in das kälteste Glied des Zyklonvorwärmsystemes zurückgeführt, während der Rest in einem Reaktionsrohr 3 min lang bei 1200°C wärmebehandelt und danach auf eine Temperatur von etwa 100°C abgekühlt wurde, worauf er durch Einführen in eine 6%ige Natriumcarbonatlösung ausgelaugt wurde. Auf die Wirkung des Auslaugens hin wurden 75 Gew.-% des $Al_2O_3$-Gehaltes des Pulvers von Puderfeinheit in Lösung gebracht (das Auslaugen wurde bewusst nicht gesteigert, da der Rückstand während der späteren Aufarbeitung zu einer günstigen Zementzusammensetzung verwertet werden konnte).

Der Auslaugrückstand wurde in bekannter Weise bei einer Temperatur von 1400°C zu etwa 2,1 t Zementklinker gebrannt und aus dem in die Laugenphase gelangten $Al_2O_3$-Gehalt wurden in bekannter Weise etwa 200 kg Tonerde erzeugt.

*Beispiel 2:*

Als Ausgangsstoffe wurden 100 t/h Kohlenstaub (Aschengehalt: 10,4 Gew.-% mit den folgenden Aschenbestandteilen: 59,2 Gew.-% $SiO_2$, 14,2 Gew.-% $Al_2O_3$, 8,3 Gew.-% $Fe_2O_3$, 10,4 Gew.-% CaO, 2,5 Gew.-% MgO und 5,4 Gew.-% Sonstiges) und dem zugesetzte 2 t/h Kalksteinpulver derselben Qualität wie die des im Beispiel 1 verwendeten in den Feuerraum eines Dampfkessels mit Kohlenstaubfeuerung geleitet. Die im Laufe des Brennens gebildeten etwa 12 t/h unbrennbarer Rückstand (das Rauchgas und das Pulver von Zementfeinheit) mit einer Temperatur von 650 bis 750°C wurden in einen unmittelbar an den Kessel angeschlossenen mehrstufigen Zyklonvorwärmer geleitet und es wurden noch 28 t/h Kalksteinpulver kontinuierlich zugesetzt, wobei das so erhaltene Materialgemisch mit den Rauchgasen (zum Teil den Rauchgasen des Klinkerbrennofens) aufgewirbelt und homogenisiert und auf eine Temperatur von etwa 950°C vorgewärmt wurde. Vom wärmsten Glied des Zyklonvorwärmers wurden etwa 45 Gew.-% des eine Temperatur von etwa 950°C aufweisenden Materiales in das kälteste Glied des Vorwärmsystemes zurückgeführt, während der Rest in einen Drehrohrofen geleitet und in diesem bei einer Temperatur von 1400°C zu Zementklinker gebrannt wurde. Die Zusammensetzung des Zementklinkers war wie folgt: 23,2 Gew.-% $SiO_2$, 5,5 Gew.-% $Al_2O_3$, 3,1 Gew.-% $Fe_2O_3$, 64,9 Gew.-% CaO, 0,8 Gew.-% MgO und 2,5 Gew.-% Sonstiges; seine Mineralzusammensetzung war wie folgt: 71 Gew.-% Tricalciumsilikat (3 $CaO \cdot SiO_2$), 7 Gew.-% Dicalciumsilikat (2 $CaO \cdot SiO_2$), und 14,2 Gew.-% Calciumferrialuminat (4 $CaO \cdot Al_2O_3 \cdot Fe_2O_3$) [$C_4AF$], was die Klinkermaterialbildner betrifft. Der erhaltene Klinker hatte eine rauhe Oberfläche und eine feine Körnung.

Diese Ausführungsform des erfindungsgemässen Verfahrens hat die folgenden Hauptvorteile:

Beim Kraftwerksdampfkessel sind keine Filter aufweisende Flugaschenabscheideanlage und keine Flugaschenhalde erforderlich.

Durch die bessere Ausnutzung des Wärmeinhaltes des heissen unbrennbaren Rückstandes des zur Kesseldampferzeugung verwendeten festen Brennmateriales macht den Herstellungsvorgang energiesparender.

Schliesslich wird die Umweltverschmutzung vermindert, da der Flugaschengehalt des Dampfkessels die natürliche Umgebung nicht verschmutzt und durch Beseitigung der Flugaschenhalden beispielsweise wertvolles landwirtschaftliches Gebiet frei wird.

## Patentansprüche

1. Verfahren zur Herstellung von calciumsilikat- und/oder calciumaluminathaltigen, gegebenenfalls pulverförmigen Klinkermaterialien für die Herstellung von Zement bzw. Zement und Tonerde, mit einem Gehalt an mindestens 40 Gew.-% Dicalciumsilikat (2 $CaO \cdot SiO_2$) und/oder Tricalciumsilikat (3 $CaO \cdot SiO_2$) und/oder Calciumaluminat (3 $CaO \cdot SiO_2$) und/oder Calciumaluminat (3 $CaO \cdot Al_2O_3$ bzw. 12 $CaO \cdot 7$ $Al_2O_3$) und/oder Calciumferrialuminat (4 $CaO \cdot Al_2O_3 \cdot Fe_2O_3$), aus einem oder mehreren festen Brenngrundmaterialien, einschliesslich Kohlenarten und Abfallstoffen mit Heizwerten von mindestens 4185 kJ/kg über deren Verbrennen bei Temperaturen unter 1700°C, und einem oder mehreren calciumhaltigen Zusatzstoffen insgesamt in Mengen entsprechend CaO-Äquivalenten von 0,2 bis 3,5 mol je Mol der $SiO_2$-, $Al_2O_3$- und $Fe_2O_3$-Hauptbestandteile der unbrennbaren Ascherückstände der Brenngrundmaterialien, wobei man einen Teil der Zusatzmenge der calciumhaltigen Zusatzstoffe zu den Brenngrundmaterialien vor und/oder nach deren Mahlen bzw. vor und/oder während ihres Verbrennens zugibt, dieses Material im Dampfkessel mit Kohlenstaubfeuerung eines Kraftwerkes verbrennt und den unbrennbaren Rückstand nach Zugabe der restlichen Menge der calciumhaltigen Zusatzstoffe erneut brennt, dadurch gekennzeichnet, dass man vom Feuerraum des Dampfkessels die Flugasche und die Rauchgase der, gegebenenfalls mit calciumhaltigen Zusatzstoffen versehenen, Brenngrundmaterialien, bei Temperaturen von 150 bis 750°C, ohne dass man den Staub in einem Elektrofilter abscheidet und durch Leiten in die Umgebung abkühlt, unmittelbar in einen an den Kessel angeschlossenen, aus mehreren Gliedern bestehenden Zyklonvorwärmer leitet, gegebenenfalls in den Zyklonvorwärmer feingemahlenes Kalksteinpulver in zur gewünschten Gemischeinstellung notwendiger Menge einführt und das Gemisch danach bei 1100 bis 1700°C fertigbrennt.

2. Verfahren nach Anspruch 1, dadurch gekennzeichnet, dass man als Kohlenarten Anthrazit, Steinkohle, Braunkohle, Lignit und/oder Brandschiefer verwendet.

3. Verfahren nach einem der beiden Ansprüche 1 oder 2, dadurch gekennzeichnet, dass man als calciumhaltige Zusatzstoffe Kalkstein, Gips, Kalkhydrat, Wollastonit, gebrannten Kalk und/oder Abfälle mit hohem Calciumgehalt verwendet.


**Revendications**

1. Procédé de fabrication de matériaux de clinker, éventuellement pulvérulents, contenant des silicates de calcium et/ou des aluminates de calcium, pour la fabrication de ciment, ou de ciment et d'alumine, ayant une teneur d'au moins 40% en poids de silicate dicalcique (2 CaO·SiO$_2$) et/ou en silicate tricalcique (3 CaO·SiO$_2$) et/ou en aluminate de calcium (3 CaO·Al$_2$O$_3$ ou 12 CaO·7 Al$_2$O$_3$) et/ou en aluminate de calcium (3 CaO·Al$_2$O$_3$ ou 12 CaO·7 Al$_2$O$_3$) et/ou en ferrialuminate de calcium (4 CaO·Fe$_2$O$_3$) en partant d'une ou de plusieurs matières premières combustibles solides, y compris des sortes de charbon et des déchets ayant des valeurs calorifiques d'au moins 4185 kJ/kg, par la combustion de ceux-ci à des températures inférieures à 1700°C, et d'un ou de plusieurs additifs contenant du calcium, en quantités totales correspondant à des équivalents CaO de 0,2 à 3,5 mol par mole des constituants principaux des cendres résiduelles incombustibles des matières premières combustibles, qui sont SiO$_2$, Al$_2$O$_3$ et Fe$_2$O$_3$, dans lequel on ajoute une partie de la quantité des additifs contenant du calcium aux matières premières combustibles avant et/ou après leur broyage ou bien avant et/ou après leur combustion, on brûle cette matière dans la chaudière à vapeur à foyer à poussier de charbon d'une centrale de production d'énergie et on brûle à nouveau le résidu incombustible après addition du reste des additifs contenant du calcium, caractérisé par le fait que, de la chambre de combustion de la chaudière à vapeur, on conduit directement la cendre volante et les gaz de fumée des matières premières combustibles contenant éventuellement des additifs qui contiennent du calcium, à des températures de 150 à 750°C, à un préchauffeur à cyclone directement raccordé à la chaudière et formé de plusieurs éléments, sans séparer la poussière dans un électrofiltre ni la refroidir en la conduisant dans l'environnement, qu'éventuellement on introduit dans le préchauffeur à cyclone de la poudre de calcaire finement broyée, en quantité nécessaire au réglage désiré du mélange, et qu'ensuite on termine la combustion du mélange entre 1100 et 1700°C.

2. Procédé selon la revendication 1, caractérisé par le fait que l'on utilise comme sortes de charbon: de l'anthracite, de la houille, du lignite et/ou du schiste charbonneux.

3. Procédé selon l'une des revendications 1 ou 2, caractérisé par le fait que, comme additifs contenant du calcium, on utilise du calcaire, du gypse, de la chaux hydratée, de la wollastonite, de la chaux vive et/ou des déchets à haute teneur en calcium.


**Claims**

1. A process for preparing, optionally pulverulent, clinker materials containing calcium silicate and/or calcium aluminate for the preparation of cement or cement and alumina, respectively having a content of at least 40% by weight of dicalcium silicate (2 CaO·SiO$_2$) and/or tricalcium silicate (3 CaO·SiO$_2$) and/or calcium aluminate (3 CaO·Al$_2$O$_3$ or 12 CaO·7 Al$_2$O$_3$, respectively) and/or calcium ferrialuminate (4 CaO·Al$_2$O$_3$·Fe$_2$O$_3$) from one or several solid fuel base materials including coal varieties and waste materials having calorific values of at least 4,185 kJ/kg via their combustion at temperatures below 1,700°C and from one or several additive materials all together in amounts corresponding to CaO equivalents of from 0.2 to 3.5 mol per mole of the SiO$_2$, Al$_2$O$_3$ and Fe$_2$O$_3$ principal ingredients of the non-combustible ash residues of the fuel base materials adding part of the amount of the additive materials containing calcium to the fuel base materials before and/or after their mealing or before and/or during their combustion, burning this material in the steam-boiler with coal-dust firing of a power-plant and again burning the incombustible residue after adding the residual amount of the additive materials containing calcium, characterized in that one leads from the combustion chamber of the steam-boiler the flue dust and the flue gases of the fuel base materials, optionally provided with additive materials containing calcium, at temperatures of from 150 to 750°C without precipitating the dust in an electrical precipitator and cooling it down by leading it in the environment immediately into a cyclone-preheater consisting of several members and connected to the boiler, optionally one introduces into the cyclone-preheater finally powdered limestone powder in an amount necessary for the desired adjustment of the mixture and thereafter one finish-burns the mixture at 1,100 to 1,700°C.

2. A process according to claim 1, characterized in that one uses as coal varieties anthracite, pit coal, brown coal, lignite and/or bituminous shale.

3. A process according to claim 1 or 2, characterized in that one uses as additive materials containing calcium limestone, plaster of Paris, calcium hydroxide, wollastonite, burnt lime and/or wastes having a high content of calcium.